# EUROPEAN PATENT APPLICATION

(11) **EP 4 535 504 A1**
(43) Date of publication of application: **09.04.2025**
(21) Application number: 24800284.2
(22) Date of filing: 19.03.2024
(51) Int. Cl.: H01M 10/42, A62C 35/10, A62C 3/16, A62D 1/00, A62C 99/00, H01M 10/658, H01M 50/204, H01M 50/593

(54) **BATTERY PACK CASE WITH FIRE-EXTINGUISHING FUNCTION, AND BATTERY PACK COMPRISING SAME**

(30) Priority: 04.05.2023 KR 20230058755; 09.08.2023 KR 20230103850
(71) Applicant: HTC Co., Ltd, Ansan-si Gyeonggi-do 15421 (KR)
(72) Inventor: KWON, Jae Sung, Yongin-si Gyeonggi-do 17003 (KR); PARK, Sang Ku, Siheung-si Gyeonggi-do 14963 (KR); KIM, Byung Soo, Incheon 22535 (KR)
(74) Representative: Cabinet Chaillot
(86) International application number: PCT/KR2024/095587
(87) International publication number: WO 2024/228604

(57) **Abstract**

Proposed are a battery pack case (100) having a fire extinguishing function and a battery pack provided with the battery pack case. The battery pack case includes case body (120) accommodating a plurality of battery modules (10) and having an open first side, and includes a case cover (110) opening and closing the open first side of the case body. The case cover (110) includes an outer shape part (111) having a chamber sealed so as to have an internal space, a fire extinguishing fluid filled in the internal space at a predetermined discharge pressure, a plurality of spray nozzles (116) formed on the outer shape part, and a plurality of sealing covers (117) formed of a fusible alloy filled inside the spray nozzles and configured to melt at a predetermined temperature so that the fire extinguishing fluid is sprayed on a battery when a fire occurs.

## Description

### Technical Field

The present disclosure relates to a battery pack case configured to perform a fire extinguishing function when a fire occurs due to thermal runaway of a battery cell. More particularly, the present disclosure relates to a battery pack case configured such that a case cover positioned above a battery pack has a function for sealing an inner portion of the battery pack case and simultaneously has a fire extinguishing function for extinguishing a fire caused by thermal runaway.

In addition, the present disclosure relates to a battery pack provided with the battery pack case as described above. More particularly, the present disclosure relates to a battery pack configured such that a fire extinguishing fluid stored in a fire extinguishing fluid storage mechanism is sprayed to a battery via the case cover positioned above the battery pack when a fire occurs in the battery so that the battery is fully or partially submerged with the fire extinguishing fluid, thereby allowing the fire extinguishing fluid to rapidly cool a battery cell or to be absorbed inside the battery cell so that an internal thermal runaway phenomenon is suppressed and the internal thermal runaway phenomenon is prevented from propagating to adjacent cells.

### Background Art

Recently, an electric vehicle using a battery is rapidly increasing. Meanwhile, a battery fire often occurs, and the occurrence of a fire due to a spark, a short circuit, and so on is a situation in which the occurrence of the fire is almost impossible to predict. Therefore, preparation for a fire is required.

A battery for an electric vehicle is configured such that multiple battery modules to which a plurality of battery cells is connected are mounted, but there is a problem that a fire is rapidly propagated to other connected battery cells or battery modules even when the fire occurs in one battery cell.

Meanwhile, an Energy Storage System (ESS) refers to a storage device which stores excessively generated electric power from a power plant and which is configured to transmit electric power in a situation in which electric power is temporarily insufficient. Recently, there has been an increasing trend of configuring a large-scale ESS device into a smaller unit for use in buildings, factories, and households as backup power sources for power outages or for reducing peak power demand.

Recently, as interest in new and renewable energy has rapidly increased due to an imbalance in power supply and demand, a technology for storing and utilizing electricity generated by using new and renewable energy through an ESS is continuously being developed.

Particularly, the ESS market continues to grow as the installation of the ESS in newly constructed public buildings has become mandatory and the installation of the ESS in private buildings has increased for energy savings.

When the ESS is installed in buildings, a battery storing energy, a BMS managing the battery, a PCS converting electric power, and so on are accommodated in a battery rack (a battery module), and such a battery rack is accommodated and operated in a designated space such as a basement and so on.

Generally, a secondary battery is capable of being recharged and reused. Recently, a lithium-ion battery having high charging and discharging efficiency has been widely used. Since the lithium-ion battery has a relatively small volume and has high charging and discharging efficiency, the use of the lithium-ion battery is increasing not only for an electric vehicle and an ESS as described above, but also for a power plant, a charging station, and a mobile device.

However, in the lithium-ion battery, since a thin separator is mounted between a negative electrode material and a positive electrode material, the separator is damaged by impact, or a fire occurs when a short circuit occurs between the negative electrode material and the positive electrode material due to aging and the growth of dendrites. In a large-sized facility, there is a problem that a significant financial damage occurs.

Meanwhile, in a battery pack including a battery module, air-cooled or water-cooled cooling technology is applied in order to maintain an appropriate cell temperature. However, when thermal runaway occurs in a battery cell, a proper temperature control is not capable of being performed. Furthermore, thermal runaway is propagated to adjacent cells, which may lead to a serious fire that ignites the entire battery.

Although there is a lot of related art in which a separate fire extinguishing apparatus is provided inside a battery module or a battery pack so as to extinguish a fire due to thermal runaway of a battery cell, there is a limitation that a fire extinguishing fluid sufficient to extinguish a fire in the battery cell is not capable of being included due to space and structural limitations. In addition, the existing related art employs a structure in which a small amount of fire extinguishing fluid is sprayed at a specific position, so that the amount of fire extinguishing fluid is absolutely insufficient for extinguishing a fire in an actual battery. Furthermore, since the battery cells are in close contact with each other, the fire extinguishing fluid does not sufficiently contact the battery cell where a fire occurs, so that there is a problem that the fire is easily propagated to adjacent cells.

### Disclosure

### Technical Problem

Accordingly, the present disclosure has been made keeping in mind the above problems occurring in the related art, and an objective of the present disclosure is to provide a battery pack case having a fire extinguishing and cooling function and a battery pack provided with the battery pack case configured such that a case cover of the battery pack is formed as an integrated part of a fire extinguishing plate so that a large amount of fire extinguishing fluid is intensively sprayed to a corresponding battery when thermal runaway occurs in a specific cell or a module, thereby extinguishing the fire effectively and preventing the fire from propagating to adjacent cells.

In addition, another objective of the present disclosure is to provide a battery pack configured such that a fire extinguishing fluid stored in a fire extinguishing fluid storage mechanism is sprayed to a battery via a case cover positioned above the battery pack when a fire occurs in the battery so that the battery is fully or partially submerged with the fire extinguishing fluid, thereby allowing the fire extinguishing fluid to rapidly cool a battery cell or to be absorbed inside the battery cell so that an internal thermal runaway phenomenon is suppressed and the internal thermal runaway phenomenon is prevented from propagating to adjacent cells.

### Technical Solution

In order to achieve the objectives described above, according to the present disclosure, there is provided a battery pack case including: a case body which is capable of accommodating a plurality of battery modules therein and which has an open first side; and a case cover configured to open and close the open first side of the case body, wherein the case cover includes: an outer shape part having at least one chamber which is sealed such that the chamber has an internal space having a predetermined capacity and which is formed in a plate shape having a predetermined width; a fire extinguishing fluid filled in the internal space of the chamber at a predetermined discharge pressure in a predetermined amount; a plurality of spray nozzles formed on the outer shape part in a direction toward the plurality of battery modules such that the plurality of spray nozzles is in communication with the internal space of the chamber; and a plurality of sealing covers which is formed of a fusible alloy filled inside the plurality of spray nozzles so as to seal the plurality of spray nozzles and which is configured to melt at a predetermined temperature due to a fire that occurs in a battery, thereby allowing the fire extinguishing fluid to be sprayed on the battery through the plurality of spray nozzles, wherein the outer shape part includes an upper plate and a lower plate that are formed of a metal material, the upper plate and the lower plate being press formed along borders thereof and being welded to each other along the borders thereof so that a predetermined internal space is formed therein, wherein each of the upper plate and the lower plate is provided with a plurality of forming parts formed such that the plurality of forming parts of the upper plate and the plurality of forming parts of the lower plate protrude inwardly so that end portions of the plurality of forming parts of the upper plate and end portions of the plurality of forming parts of the lower plate are in surface contact with each other when the upper plate and the lower plate are brought into contact with each other, the plurality of forming parts of the upper plate and the plurality of forming parts of the lower plate being welded with each other, wherein each of the plurality of spray nozzles is formed as an integrated part of the lower plate by forming a hole in the lower plate in a state in which a portion of the lower plate further protrudes outwardly, and wherein a coupling force between each of the plurality of sealing covers formed of the fusible alloy and an inner surface of each of the plurality of spray nozzles is further reinforced by threading the inner surface of each of the plurality of spray nozzles.

The lower plate may further include a separate insulation coating layer or an insulation pad for insulating the lower plate from a terminal inside a battery pack.

The predetermined discharge pressure of the fire extinguishing fluid may be formed by filling the internal space of the chamber with compressed air or nitrogen gas.

In addition, in order to achieve the objectives described above, according to the present disclosure, there is provided a battery pack including: a plurality of battery modules; and a case accommodating the plurality of battery modules, wherein the case includes: a case body which is capable of accommodating the plurality of battery modules therein and which has an open first side; and a case cover configured to open and close the open first side of the case body, wherein the case cover is configured as described above.

The battery pack may further include a fire extinguishing fluid storage mechanism configured to store a fire extinguishing fluid at a predetermined discharge pressure in an amount sufficient to submerge all or some of the plurality of battery modules in the case, the fire extinguishing fluid storage mechanism being configured to supply the fire extinguishing fluid into the case when the fire occurs in the battery.

It is preferable that the case body has an inner portion provided with a partition wall structure divided into a plurality of sections so that the plurality of battery modules is capable of being accommodated in respective separation spaces, and it is more preferable that a height of a partition wall of the case body is smaller than a height of a border of the case body.

Each of the plurality of battery modules may include a plurality of stacked battery cells and a plurality of porous absorption pads disposed between the plurality of battery cells.

The fire extinguishing fluid storage mechanism may be in communication with a first side of the outer shape part through a communication line so that the fire extinguishing fluid stored in the fire extinguishing fluid storage mechanism is sprayed through an open discharge port of the plurality of spray nozzles via the outer shape part toward the battery where the fire occurs.

The predetermined discharge pressure of the fire extinguishing fluid in the fire extinguishing fluid storage mechanism and the predetermined discharge pressure of the fire extinguishing fluid in the case cover may be formed by filling each internal space of the fire extinguishing fluid storage mechanism and the case cover with compressed air or nitrogen gas.

### Advantageous Effects

In the present disclosure, since the case cover of the battery pack is configured as an integrated part with a fire extinguishing plate, a large amount of fire extinguishing fluid is intensively sprayed to the corresponding battery when thermal runaway occurs in a specific cell or a module, so that there is an effect the fire is capable of being extinguished effectively and the fire is capable of being prevented from propagating to the adjacent cells.

In addition, since the battery pack is configured such that the fire extinguishing fluid stored in the fire extinguishing fluid storage mechanism is sprayed to the battery via the case cover positioned above the battery pack when a fire occurs in the battery, the battery is fully or partially submerged with the fire extinguishing fluid, so that there is an effect that the fire extinguishing fluid is capable of rapidly cooling the battery cell or the fire extinguishing fluid is capable of being absorbed inside the battery cell so that an internal thermal runaway phenomenon is suppressed and the internal thermal runaway phenomenon is prevented from propagating to the adjacent cells.

That is, in the present disclosure, the fire extinguishing fluid stored in the case cover positioned above the battery pack is primarily sprayed to a region where a fire occurs so that a flame is rapidly extinguished, the fire extinguishing fluid stored in the fire extinguishing fluid storage mechanism is secondarily sprayed to the case such that the battery is fully or partially submerged with the fire extinguishing fluid so that the fire extinguishing fluid is absorbed inside the battery cell, so that an internal thermal runaway phenomenon is capable of being suppressed and the internal thermal runaway phenomenon is capable of being propagated to the adjacent cells.

Specifically, in the present disclosure, when the temperature of the battery is increased due to the occurrence of a fire in the battery, the temperature of the spray nozzle of the case cover at a region closest to the battery where the fire occurs increases, the fusible alloy that has been sealing the discharge port of the spray nozzle is melted at the predetermined temperature and the discharge port of the corresponding spray nozzle is open, and the fire extinguishing fluid embedded in the internal space of the chamber of the case cover is primarily sprayed toward the battery through the open discharge port with the predetermined discharge pressure, so that the initial fire of the battery where the fire occurs is capable of being extinguished. After then, the fire extinguishing fluid stored in the fire extinguishing fluid storage mechanism is secondarily sprayed through the open discharge port of the spray nozzle via the case cover to the battery where the fire occurs, and the battery module where the fire occurs is fully or partially submerged with the fire extinguishing fluid, so that the fire extinguishing fluid is absorbed inside the battery cell, thereby being capable of suppressing the internal thermal runaway phenomenon and preventing the internal thermal runaway phenomenon from propagating to the adjacent cells. In addition, when the fire extinguishing fluid overflows beyond the partition wall of the battery module where the fire occurs, the separation space of the adjacent battery module is also filled with the fire extinguishing fluid, thereby being capable of performing a function of preventing flames and heat from propagating to the adjacent cells.

### Description of Drawings

FIG. 1 and FIG. 2 are a schematic perspective view and a cross-sectional view that are illustrating a configuration relationship of a battery pack provided with a battery pack case having a fire extinguishing function according to a first embodiment of the present disclosure,
FIG. 3 is a transverse cross-sectional view illustrating the battery pack case having the fire extinguishing function illustrated in FIG. 1,
FIG. 4 shows enlarged cross-sectional views illustrating the A part in FIG. 3,
FIG. 5 is a schematic view illustrating a configuration relationship of the battery pack provided with the battery pack case having the fire extinguishing function according to a second embodiment of the present disclosure,
FIG. 6 is a schematic view illustrating a configuration relationship of a battery module illustrated in FIG. 5 and a circulation process of a fire extinguishing fluid,
FIG. 7 is a perspective view illustrating a configuration relationship of a case body illustrated in FIG. 5,
FIG. 8 is a plan view illustrating a state in which the battery module is disposed within a partition wall of the case body illustrated in FIG. 7,
FIG. 9 is a cross-sectional view illustrating a configuration relationship of a case cover illustrated in FIG. 5, and
FIG. 10 shows enlarged cross-sectional views illustrating the B part illustrated in FIG. 9.

### Mode for Invention

A battery pack case having a fire extinguishing function according to the present disclosure is disposed in a form in which the battery pack case is in contact with or positioned adjacent to a battery of such as an electric vehicle, an Energy Storage System (ESS), and so on, and is used for extinguishing a fire when a fire occurs in the battery. In addition, a battery pack of the present disclosure is applicable to an electric vehicle, an ESS, and so on, and is configured such that a fire is capable of being extinguished when a fire occurs in a corresponding battery.

Hereinafter, exemplary embodiments of the battery pack case having the fire extinguishing function and the battery pack provided with the battery pack case according to the present disclosure will be described in detail with reference to the accompanying drawings. The present disclosure is not limited to the embodiments disclosed below, but may be implemented in various different forms. The present embodiments are provided so that the present disclosure will be thorough and complete, and will fully convey the scope of the present disclosure to those skilled in the art.

### [First Embodiment]

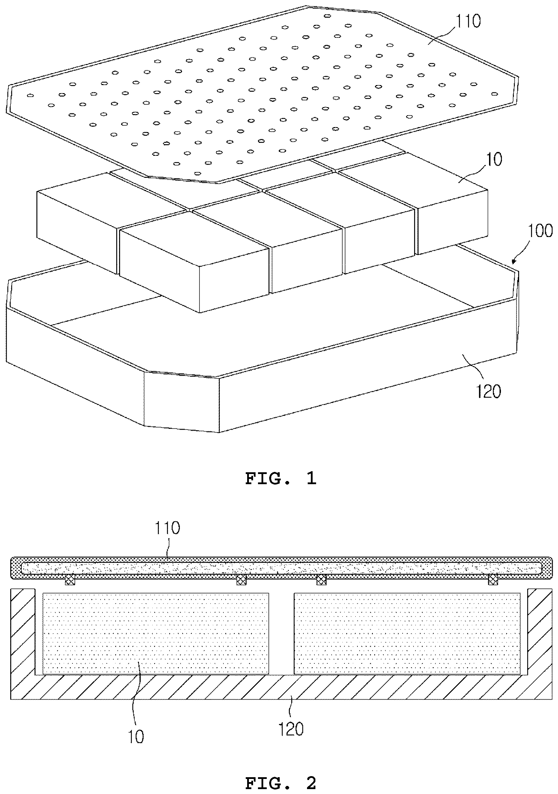

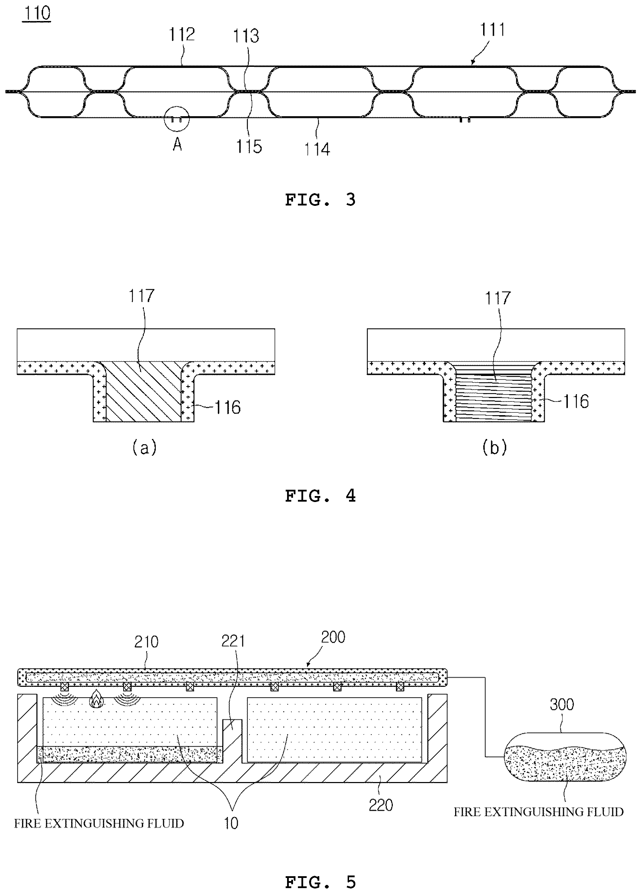

FIG. 1 and FIG. 2 are a schematic perspective view and a cross-sectional view that are illustrating a configuration relationship of a battery pack provided with a battery pack case having a fire extinguishing function according to a first embodiment of the present disclosure, FIG. 3 is a transverse cross-sectional view illustrating the battery pack case having the fire extinguishing function illustrated in FIG. 1, and FIG. 4 shows enlarged cross-sectional views illustrating the A part in FIG. 3.

As illustrated in FIG. 1 to FIG. 4, the battery pack according to this embodiment includes a plurality of battery modules 10 and a case 100 accommodating the plurality of battery modules 10.

The plurality of battery modules 10 are members configured to generate electrochemical energy by a movement of ions or electrons, and may be arranged inside the case 100. Here, the plurality of battery modules 10 may be arranged in a plurality of columns and rows inside the case 100. In addition, one battery module 10 may include a plurality of stacked battery cells, and each of the battery cells may include a positive electrode plate, a negative electrode plate, and a separator interposed between the positive electrode plate and the negative electrode plate. In addition, the battery module 10 may be provided with a protection circuit module that is provided in each battery cell, or a protection circuit module that is integrally connected to several battery cells. Furthermore, the protection circuit module may control a voltage or a current during charging and discharging of the battery cell. In addition, an electrode tab may be pulled out from each battery cell, and an electrode assembly may include all known forms such as a stacked form or a wound form.

The case 100 is a member that accommodates the plurality of battery modules 10 therein, and may include a case body 120 and a case cover 110. Here, the case body 120 may accommodate the plurality of battery modules 10 therein, and may be formed in a box shape having an open first side. Furthermore, the case cover 110 may open and close the open first side of the case body 120. Therefore, when the case cover 110 closes the case body 120, an inner portion of the case body 120 may be protected from the external environment.

The case cover 110 is configured such that the case cover 110 simultaneously has a function of sealing the inner portion of the case body 120 and a fire extinguishing function for extinguishing a fire caused by thermal runaway. That is, the case cover 110 is configured as an integrated part with a fire extinguishing plate so that the case cover 110 is configured to effectively extinguish a fire and to prevent the fire from propagating to adjacent cells by intensively spraying a large amount of fire extinguishing fluid on a corresponding battery when thermal runaway occurs on a specific cell or a module.

Such a case cover 110 is configured to extinguish a fire by spraying an embedded fire extinguishing fluid on a region where the fire occurs when the fire occurs in a battery (a specific cell or a module). The case cover 110 includes an outer shape part 111 in which a chamber sealed such that the chamber has an internal space having a predetermined capacity is formed in a plate shape having a predetermined width, a fire extinguishing fluid (not illustrated) filled in the internal space of the chamber at a predetermined discharge pressure in a predetermined amount, a plurality of spray nozzles 116 formed on the outer shape part 111 in a direction toward the plurality of battery modules 10 such that the plurality of spray nozzles 116 is in communication with the internal space of the chamber, and a plurality of sealing covers 117 which is formed of a fusible alloy filled inside the plurality of spray nozzles 116 so as to seal the plurality of spray nozzles 116 and which is configured to melt when the plurality of sealing covers 117 is heated to a temperature equal to or more than a predetermined temperature when thermal runaway of the battery occurs, thereby allowing the fire extinguishing fluid to be sprayed on the battery through the plurality of spray nozzles 116.

The outer shape part 111 serves as a frame constituting an external appearance of the case cover 110, and includes an upper plate 112 and a lower plate 114 which are press formed along borders thereof and which are welded to each other along the borders thereof so that a predetermined internal space is formed therein. The upper and lower plates 112 and 114 of this embodiment are formed of a metal material such as stainless steel or aluminum. Furthermore, in consideration of weight reduction and rigidity, it is preferable that the thickness of the upper and lower plates 112 and 114 is between 0.2 mm and 1.0 mm. Meanwhile, in consideration of the fire extinguishing fluid capacity, a structure of a vehicle, and weight, it is preferable that the overall thickness of the case cover 110 is between 3 mm and 10 mm.

Meanwhile, as illustrated in FIG. 3, the upper plate 112 and the lower plate 114 are configured such that the upper plate 112 and the lower plate 114 respectively have a plurality of forming parts 113 and 115 press formed in embossed shapes such that the plurality of forming parts 113 and 115 protrudes inwardly. Here, the upper and lower plates 112 and 114 are configured to respectively have the same forming parts 113 and 115. Therefore, when the upper plate 112 and the lower plate 114 are brought into contact with each other, end portions of the forming parts 113 and 115 are in surface contact with each other. In addition, the borders of the upper and lower plates 112 and 114 that are press formed in the embossed shapes are welded with each other and the forming parts 113 and 115 are welded with each other, thereby sealing the upper and lower plates 112 and 114 and the forming parts 113 and 115 so that the rigidity for preventing expansion deformation due to the fire extinguishing fluid which is filled in the upper and lower plates 112 and 114 and which has a high pressure is realized and the fire extinguishing fluid does not leak.

As illustrated in FIG. 4, the lower plate 114 faces the inside of the battery pack, i.e., the lower plate 114 faces the plurality of battery modules 10. Furthermore, the plurality of heat sensitive spray nozzles 116 is attached to the lower plate 114, so that the fire extinguishing fluid is automatically sprayed through the spray nozzles 116 due to the internal temperature increase of the battery module or the battery pack when a fire occurs in the battery. Here, the heat sensitive spray nozzle 116 is formed by forming the spray nozzle 116 having the sealing cover 117 sealed with a fusible alloy that melts at a low temperature (60 degrees Celsius to 150 degrees Celsius) on the lower plate 114. Therefore, when the internal temperature of the battery pack reaches a predetermined temperature, the fusible alloy is melted and the spray nozzle 116 is open, so that the fire extinguishing fluid having the high pressure is sprayed through a discharge port of the spray nozzle 116. The fusible alloy of this embodiment may be formed by mixing elements such as bismuth, lead, tin, indium, cadmium, gallium, and so on.

Meanwhile, the spray nozzle 116 is formed as an integrated part of the lower plate 114 by forming a hole in the lower plate 114 in a state in which a portion of the lower plate 114 further protrudes outwardly through a burring process when the lower plate 114 is press formed in the embossed shape. That is, the spray nozzle 116 of this embodiment is configured as an integral part of the lower plate 114 without mounting a separate plug during nozzle manufacturing, so that there is an effect that the manufacturing cost is reduced and the thickness of the lower plate 114 is reduced. At this time, in consideration of the sealing rigidity and the spray speed, it is preferable that the inner diameter of the spray nozzle 116 is 2 mm to 5 mm and the height of the spray nozzle 116 is 2 mm to 5 mm.

The case cover 110 of this embodiment has a shape in which a predetermined amount of fire extinguishing fluid is filled in the internal space of the chamber at a predetermined discharge pressure. Therefore, the sealing cover 117 that has been sealing the discharge port of the spray nozzle 116 is required to be not separated from the discharge port by the discharge pressure of the fire extinguishing fluid unless the fusible alloy that constitutes the sealing cover 117 is melted by external heat due to a fire and so on. However, as can be seen in FIG. 4, when the burring process is performed, the spray nozzle 116 in this embodiment has a tapered shape in which an upper portion of the spray nozzle 116 is curved. Therefore, there is no concern that the sealing cover 117 that has been sealing the discharge port of the spray nozzle 116 will be separated from the discharge port by the discharge pressure of the fire extinguishing fluid. However, as illustrated in FIG. 4(b), it is more preferable that an inner surface of the spray nozzle 116 is threaded such that a coupling force between the spray nozzle 116 and the sealing cover 117 formed of the fusible alloy is further reinforced so that the sealing cover 117 withstands the fire extinguishing fluid having a higher discharge pressure.

In addition, the lower plate 114 may be configured such that a separate insulation coating layer or an insulation pad for insulating the lower plate 114 from a terminal such as a busbar inside the battery pack is further attached to the lower plate 114.

Meanwhile, the predetermined amount of fire extinguishing fluid is filled in the internal space of the chamber of this embodiment so that the fire extinguishing fluid has the predetermined discharge pressure. At this time, in order to embed the fire extinguishing fluid so that the fire extinguishing fluid has the predetermined discharge pressure, the internal space of the chamber is filled with compressed air or nitrogen gas. That is, a communication port (not illustrated) in communication with the internal space of the chamber is formed. For example, the communication port is formed in one region of a first side of the upper plate 112. Then, in a state in which vacuum is applied to the internal space of the chamber through the communication port, the predetermined amount of fire extinguishing fluid is filled in the internal space of the chamber by the vacuum pressure, and then compressed air or nitrogen gas is filled in the internal space of the chamber, so that a state in which the fire extinguishing fluid having the predetermined discharge pressure is filled in the internal space of the chamber is realized. Therefore, when the discharge port of the spray nozzle 116 is open, the fire extinguishing fluid is sprayed toward the battery by the discharge pressure thereof. Meanwhile, the fire extinguishing fluid is a chemical agent that extinguishes a fire by a cooling effect due to latent heat of evaporation as the chemical agent reacts with a flame and then the chemical agent evaporates, and it is preferable that the fire extinguishing fluid is embedded in the internal space of the chamber such that the discharge pressure (internal pressure) of the fire extinguishing fluid is 5 kgf/cm² to 10 kgf/cm².

In order for the fire extinguishing fluid to have the cooling effect, it is preferable to employ a chemical agent that easily evaporates at a low temperature, and it is more preferable to use a fluorine-based ketone (FK-5-1-12, dodecafluoro-2-methylpentan-3-one) having an insulation characteristic. In addition, water having very excellent latent heat of evaporation is capable of being used as the fire extinguishing fluid and is capable of being sprayed in a mist form, a reinforced fire extinguishing agent is also capable of being used as the fire extinguishing fluid, and a mixture in which water and the reinforced fire extinguishing agent are mixed with each other is also capable of being used as the fire extinguishing fluid.

In this embodiment, the outer shape part 111 is configured as one chamber, but may be configured as a plurality of chambers having respective internal spaces that are sealed and partitioned from each other. At this time, the number of chambers may be variously changed according to the application environment.

The case cover 110 of this embodiment configured as described above is capable of extinguishing an initial fire when the fire occurs in the battery. That is, when the temperature of the battery is increased due to the occurrence of a fire in the battery, the temperature of the spray nozzle 116 at a region closest to the battery where the fire occurs increases, the fusible alloy that has been sealing the discharge port of the spray nozzle 116 is melted at the predetermined temperature and the discharge port of the corresponding spray nozzle 116 is open, and the fire extinguishing fluid embedded in the internal space of the chamber is sprayed toward the battery through the open discharge port with the predetermined discharge pressure, so that the initial fire of the battery where the fire occurs is capable of being extinguished.

Meanwhile, the case cover 110 of this embodiment may be configured such that the case cover 110 is further provided with a pressure gauge (not illustrated) configured to measure a pressure inside the chamber. In addition, the case cover 110 of this embodiment may be configured such that the case cover 110 is used in connection with a tank in which a separate fire extinguishing fluid is stored so that the fire extinguishing fluid stored inside the chamber and the fire extinguishing fluid stored in the tank are capable of being sprayed toward a region where a fire occurs, thereby being capable of realizing more efficient fire extinguishing.

The case cover 110 of this embodiment configured as described above may be disposed in a form in which the case cover 110 is in contact with or positioned adjacent to a battery of such as an electric vehicle, an ESS, and so on, and may be used to extinguish a fire when a fire occurs in the battery.

### [Second Embodiment]

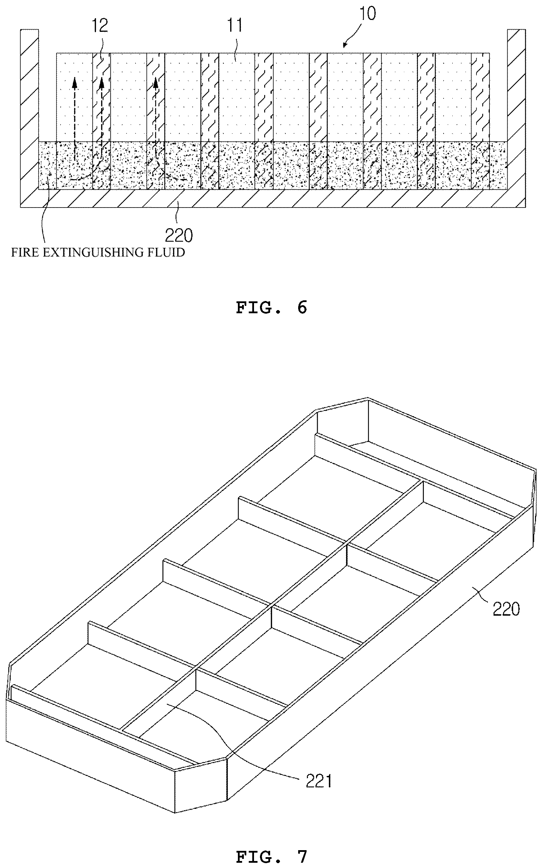

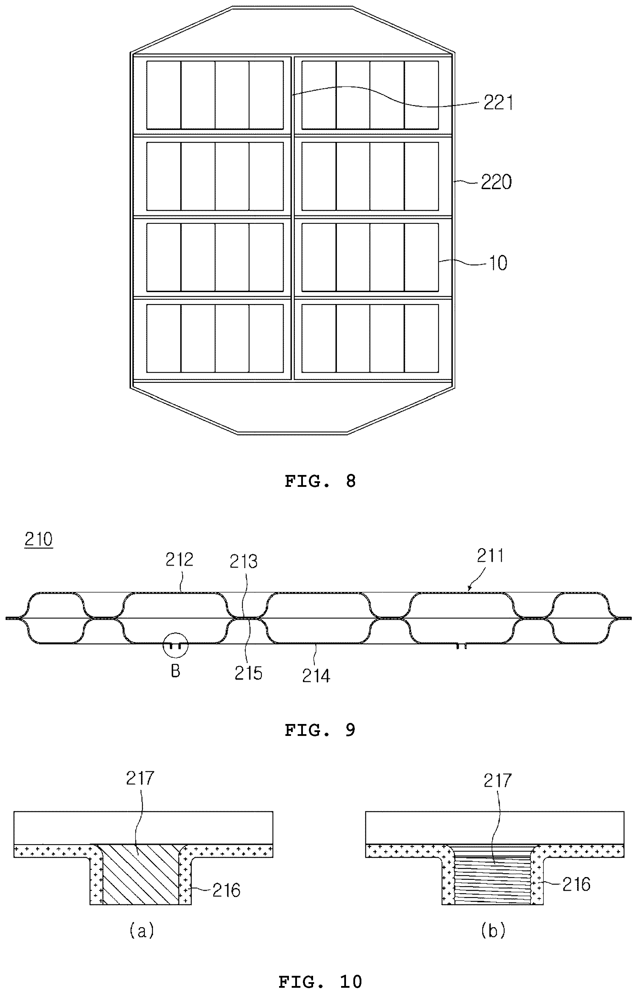

FIG. 5 is a schematic view illustrating a configuration relationship of the battery pack provided with the battery pack case having the fire extinguishing function according to a second embodiment of the present disclosure, FIG. 6 is a schematic view illustrating a configuration relationship of a battery module illustrated in FIG. 5 and a circulation process of a fire extinguishing fluid, FIG. 7 is a perspective view illustrating a configuration relationship of a case body illustrated in FIG. 5, FIG. 8 is a plan view illustrating a state in which the battery module is disposed within a partition wall of the case body illustrated in FIG. 7, FIG. 9 is a cross-sectional view illustrating a configuration relationship of a case cover illustrated in FIG. 5, and FIG. 10 shows enlarged cross-sectional views illustrating the B part illustrated in FIG. 9.

As illustrated in FIG. 5 to FIG. 10, the battery pack provided with the battery pack case having the fire extinguishing function according to a second embodiment of the present disclosure includes a plurality of battery modules 10, a case 200 respectively accommodating the plurality of battery modules 10 in respective separation spaces, and a fire extinguishing fluid storage mechanism 300 configured to store a fire extinguishing fluid at a predetermined discharge pressure, in an amount sufficient to submerge all or some of the plurality of battery modules 10 in the case 200, and configured to supply the fire extinguishing fluid into the case 200.

The plurality of battery modules 10 are members configured to generate electrochemical energy by a movement of ions or electrons, and may be arranged inside the case 200. Here, the plurality of battery modules 10 may be arranged in a plurality of columns and rows inside the case 200 (see FIG 8). In addition, one battery module 10 may include a plurality of battery cells 11 stacked as illustrated in FIG. 6, and each of the battery cells 11 may include a positive electrode plate, a negative electrode plate, and a separator interposed between the positive electrode plate and the negative electrode plate. In addition, the battery module 10 may be provided with a protection circuit module that is provided in each battery cell 11, or a protection circuit module that is integrally connected to several battery cells 11. Furthermore, the protection circuit module may control a voltage or a current during charging and discharging of the battery cell 11. In addition, an electrode tab may be pulled out from each battery cell 11, and an electrode assembly may include all known forms such as a stacked form or a wound form.

In addition, as illustrated in FIG. 6, the battery module 10 may include a plurality of porous absorption pads 12 disposed between the plurality of battery cells 11. It is preferable that the porous absorption pad 12 is formed of a non-flammable material having a capillary force capable of absorbing the fire extinguishing fluid even when both sides of the porous absorption pad 12 are in contact with the battery cells 11. An inorganic fiber material such as glass wool, ceramic wool, and so on may be used as the non-flammable material, a granular inorganic material such as silica, activated carbon, and so on may be used as the non-flammable material, or a mixture of an inorganic material and heat-resistant silicone may be used as the non-flammable material. As the porous absorption pad 12 is provided between the battery cells 11, a fire is capable of being extinguished by cooling the battery more efficiently when the fire occurs, and also a flame and heat are capable of being prevented from propagating to adjacent battery cells.

The case 200 is a member that accommodates the plurality of battery modules 10 in the respective separation spaces, and may include a case body 220 and a case cover 210. Here, the case body 220 may accommodate the plurality of battery modules 10 therein, and may be formed in a box shape having an open first side. Furthermore, in order to accommodate the plurality of battery modules 10 in the respective separation spaces, the case body 220 is configured such that the case body 220 has a partition wall structure divided into a plurality of sections (see FIG. 7 and FIG. 8). Therefore, the fire extinguishing fluid may be filled only in the separation space of the battery module 10 where a fire occurs primarily, so that the battery module 10 at this region may be fully or partially submerged (see FIG. 5). Meanwhile, a partition wall 221 of the case body 220 may have a height lower than a height of a border of the case body 220. In this situation, the fire extinguishing fluid may be primarily filled in the separation space of the battery module 10 where a fire occurs, thereby extinguishing the fire. Furthermore, when the fire extinguishing fluid overflows beyond the partition wall 221, the fire extinguishing fluid is filled in the separation space of the adjacent battery module 10, thereby being capable of performing a function of preventing flames and heat propagating to adjacent cells.

The case cover 210 may open and close the open first side of the case body 220. Therefore, when the case cover 210 closes the case body 220, an inner portion of the case 200 may be protected from the external environment.

In addition, the case cover 210 is configured such that the case cover 210 simultaneously has a function of sealing the inner portion of the case body 220 and a fire extinguishing function for extinguishing a fire caused by thermal runaway. That is, the case cover 210 is configured as an integrated part with a fire extinguishing plate so that the case cover 210 is configured to effectively extinguish a fire and to prevent the fire from propagating to adjacent cells by intensively spraying a large amount of fire extinguishing fluid on a corresponding battery when thermal runaway occurs on a specific cell or a module.

Such a case cover 210 is configured to extinguish a fire by spraying an embedded fire extinguishing fluid on a region where the fire occurs when the fire occurs in a battery (a specific cell or a module). The case cover 210 includes an outer shape part 211 in which a chamber sealed such that the chamber has an internal space having a predetermined capacity is formed in a plate shape having a predetermined width, a fire extinguishing fluid filled in the internal space of the chamber at a predetermined discharge pressure in a predetermined amount, a plurality of spray nozzles 216 formed on the outer shape part 211 in a direction toward the plurality of battery modules 10 such that the plurality of spray nozzles 216 is in communication with the internal space of the chamber, and a plurality of sealing covers 217 which is formed of a fusible alloy filled inside the plurality of spray nozzles 216 so as to seal the plurality of spray nozzles 216 and which is configured to melt when the plurality of sealing covers 217 is heated to a temperature equal to or more than a predetermined temperature when thermal runaway of the battery occurs, thereby allowing the fire extinguishing fluid to be sprayed on the battery through the plurality of spray nozzles 216.

The outer shape part 211 serves as a frame constituting an external appearance of the case cover 210, and includes an upper plate 212 and a lower plate 214 which are press formed along borders thereof and which are welded to each other along the borders thereof so that a predetermined internal space is formed therein. The upper and lower plates 212 and 214 of this embodiment are formed of a metal material such as stainless steel or aluminum. Furthermore, in consideration of weight reduction and rigidity, it is preferable that the thickness of the upper and lower plates 212 and 214 is between 0.2 mm and 1.0 mm. Meanwhile, in consideration of the fire extinguishing fluid capacity, a structure of a vehicle, and weight, it is preferable that the overall thickness of the case cover 210 is between 3 mm and 10 mm.

Meanwhile, as illustrated in FIG. 9, the upper plate 212 and the lower plate 214 are configured such that the upper plate 212 and the lower plate 214 respectively have a plurality of forming parts 213 and 215 press formed in embossed shapes such that the plurality of forming parts 213 and 215 protrudes inwardly. Here, the upper and lower plates 212 and 214 are configured to respectively have the same forming parts 213 and 215. Therefore, when the upper plate 212 and the lower plate 214 are brought into contact with each other, end portions of the forming parts 213 and 215 are in surface contact with each other. In addition, the borders of the upper and lower plates 212 and 214 that are press formed in the embossed shapes are welded with each other and the forming parts 213 and 215 are welded with each other, thereby sealing the upper and lower plates 212 and 214 and the forming parts 213 and 215 so that the rigidity for preventing expansion deformation due to the fire extinguishing fluid which is filled in the upper and lower plates 212 and 214 and which has a high pressure is realized and the fire extinguishing fluid does not leak.

As illustrated in FIG. 10, the lower plate 214 faces the inside of the battery pack, i.e., the lower plate 214 faces the plurality of battery modules 10. Furthermore, the plurality of heat sensitive spray nozzles 216 is attached to the lower plate 214, so that the fire extinguishing fluid is automatically sprayed through the spray nozzles 216 due to the internal temperature increase of the battery module or the battery pack when a fire occurs in the battery. Here, the heat sensitive spray nozzle 216 is formed by forming the spray nozzle 216 having the sealing cover 217 sealed with a fusible alloy that melts at a low temperature (60 degrees Celsius to 150 degrees Celsius) on the lower plate 214. Therefore, when the internal temperature of the battery pack reaches a predetermined temperature, the fusible alloy is melted and the spray nozzle 216 is open, so that the fire extinguishing fluid having the high pressure is sprayed through a discharge port of the spray nozzle 216. The fusible alloy of this embodiment may be formed by mixing elements such as bismuth, lead, tin, indium, cadmium, gallium, and so on.

Meanwhile, the spray nozzle 216 is formed as an integrated part of the lower plate 214 by forming a hole in the lower plate 214 in a state in which a portion of the lower plate 214 further protrudes outwardly through a burring process when the lower plate 214 is press formed in the embossed shape. That is, the spray nozzle 216 of this embodiment is configured as an integral part of the lower plate 214 without mounting a separate plug for manufacturing a nozzle, so that there is an effect that the manufacturing cost is reduced and the thickness of the spray nozzle 216 is reduced. At this time, in consideration of the sealing rigidity and the spray speed, it is preferable that the inner diameter of the spray nozzle 216 is 2 mm to 5 mm and the height of the spray nozzle 216 is 2 mm to 5 mm.

The case cover 210 of this embodiment has a shape in which a predetermined amount of fire extinguishing fluid is filled in the internal space of the chamber at a predetermined discharge pressure. Therefore, the sealing cover 217 that has been sealing the discharge port of the spray nozzle 216 is required to be not separated from the discharge port by the discharge pressure of the fire extinguishing fluid unless the fusible alloy that constitutes the sealing cover 217 is melted by external heat due to a fire and so on. However, as can be seen in FIG. 10, when the burring process is performed, the spray nozzle 216 in this embodiment has a tapered shape in which an upper portion of the spray nozzle 216 is curved. Therefore, there is no concern that the sealing cover 217 that has been sealing the discharge port of the spray nozzle 216 will be separated from the discharge port by the discharge pressure of the fire extinguishing fluid. However, as illustrated in FIG. 10(b), it is more preferable that an inner surface of the spray nozzle 216 is threaded such that a coupling force between the spray nozzle 216 and the sealing cover 217 formed of the fusible alloy is further reinforced so that the sealing cover 217 withstands the fire extinguishing fluid having a higher discharge pressure.

In addition, the lower plate 214 may be configured such that a separate insulation coating layer or an insulation pad for insulating the lower plate 214 from a terminal such as a busbar inside the battery pack is further attached to the lower plate 214.

Meanwhile, the predetermined amount of fire extinguishing fluid is filled in the internal space of the chamber of this embodiment so that the fire extinguishing fluid has the predetermined discharge pressure. At this time, in order to embed the fire extinguishing fluid so that the fire extinguishing fluid has the predetermined discharge pressure, the internal space of the chamber is filled with compressed air or nitrogen gas. That is, a communication port (not illustrated) in communication with the internal space of the chamber is formed. For example, the communication port is formed in one region of a first side of the upper plate 212. Then, in a state in which vacuum is applied to the internal space of the chamber through the communication port, the predetermined amount of fire extinguishing fluid is filled in the internal space of the chamber by the vacuum pressure, and then compressed air or nitrogen gas is filled in the internal space of the chamber, so that a state in which the fire extinguishing fluid having the predetermined discharge pressure is filled in the internal space of the chamber is realized. Therefore, when the discharge port of the spray nozzle 216 is open, the fire extinguishing fluid is sprayed toward the battery by the discharge pressure thereof. Meanwhile, the fire extinguishing fluid is a chemical agent that extinguishes a fire by a cooling effect due to latent heat of evaporation as the chemical agent reacts with a flame and then the chemical agent evaporates, and it is preferable that the fire extinguishing fluid is embedded in the internal space of the chamber such that the discharge pressure (internal pressure) of the fire extinguishing fluid is 5 kgf/cm² to 10 kgf/cm².

In order for the fire extinguishing fluid to have the cooling effect, it is preferable to employ a chemical agent that easily evaporates at a low temperature. Furthermore, in order to prevent a short circuit between a battery terminal and a busbar when the fire extinguishing fluid is sprayed, it is more preferable to use a fluorinated ketone (C6F120) or a fluorine-based ketone (FK-5-1-12, dodecafluoro-2-methylpentan-3-one) having an insulation characteristic.

In this embodiment, the outer shape part 211 is configured as one chamber, but may be configured as a plurality of chambers having respective internal spaces that are sealed and partitioned from each other. At this time, the number of chambers may be variously changed according to the application environment. Meanwhile, the case cover 210 of this embodiment may be configured such that the case cover 210 is further provided with a pressure gauge (not illustrated) configured to measure a pressure inside the chamber.

As illustrated in FIG. 5, the fire extinguishing fluid storage mechanism 300 is configured to store a predetermined amount of fire extinguishing fluid at the predetermined discharge pressure and to supply the fire extinguishing fluid into the case 200 when a fire occurs in the battery, and is in communication with the first side of the outer shape part 211 of the case cover 210 through a communication line.

In addition, the fire extinguishing fluid storage mechanism 300 has a structure in which the predetermined amount of fire extinguishing fluid is filled in a tank of the fire extinguishing fluid storage mechanism 300 such that the fire extinguishing fluid storage mechanism 300 has a predetermined discharge pressure equal to the predetermined discharge inside the case cover 210. At this time, in order to embed the fire extinguishing fluid so that the fire extinguishing fluid has the predetermined discharge pressure, the internal space of the tank is filled with compressed air or nitrogen gas. Fluorinated ketone (C6F120) or a fluorine-based ketone (FK-5-1-12, dodecafluoro-2-methylpentan-3-one) having an insulation characteristic, which is same as the fire extinguishing fluid in the case cover 210, may be used as the fire extinguishing fluid in the fire extinguishing fluid storage mechanism. Such a fire extinguishing fluid storage mechanism 300 serves to more completely extinguish a fire by spraying the stored fire extinguishing fluid via the case cover 210 to a region where the fire occurs when the fire occurs in the battery (a specific cell or module).

In the battery pack of this embodiment, the fire extinguishing fluid stored in the case cover 210 is primarily sprayed to a region where a fire occurs so that a flame is rapidly extinguished, the fire extinguishing fluid stored in the fire extinguishing fluid storage mechanism 300 is secondarily sprayed via the case cover 210 to the region where the fire occurs such that the battery is fully or partially submerged with the fire extinguishing fluid so that the fire extinguishing fluid is absorbed inside the battery cell 11, thereby suppressing an internal thermal runaway phenomenon and preventing the internal thermal runaway phenomenon from propagating to adjacent cells. Meanwhile, the battery pack in this embodiment is configured such that the battery pack is provided with a vent valve (not illustrated) on the case body 220, which is same as a general battery pack. Therefore, when a fire occurs in the battery, the vent valve is opened so that the fire extinguishing fluid is capable of being smoothly sprayed without being affected by an internal pressure inside the case 200.

The battery pack of this embodiment configured as described above is capable of being initially extinguishing a fire when the fire occurs in the battery, and is also capable of suppressing a thermal runaway phenomenon and preventing the thermal runaway phenomenon from propagating to adjacent cells. That is, when the temperature of the battery is increased due to the occurrence of a fire in the battery, the temperature of the spray nozzle 216 of the case cover 210 at a region closest to the battery where the fire occurs increases, the fusible alloy that has been sealing the discharge port of the spray nozzle 216 is melted at the predetermined temperature and the discharge port of the corresponding spray nozzle 216 is open, and the fire extinguishing fluid embedded in the internal space of the chamber of the case cover 210 is primarily sprayed toward the battery through the open discharge port with the predetermined discharge pressure, so that the initial fire of the battery where the fire occurs is capable of being extinguished. After then, the fire extinguishing fluid stored in the fire extinguishing fluid storage mechanism 300 is secondarily sprayed through the open discharge port of the spray nozzle 216 via the case cover 210 to the battery where the fire occurs, and the battery module 10 where the fire occurs is fully or partially submerged with the fire extinguishing fluid, so that the fire extinguishing fluid is absorbed inside the battery cell 11, thereby suppressing the internal thermal runaway phenomenon and preventing the internal thermal runaway phenomenon from propagating to the adjacent cells. In addition, when the fire extinguishing fluid overflows beyond the partition wall 221 of the battery module 10 where the fire occurs, the separation space of the adjacent battery module 10 is also filled with the fire extinguishing fluid, thereby being capable of performing a function of preventing flames and heat from propagating to the adjacent cells.

The features of the battery pack case having the fire extinguishing function and the battery pack provided with the battery pack case of the present disclosure have been described above with reference to the accompanying drawings, but they are just preferable examples. Therefore, it is apparent to those skilled in the art that the present disclosure is not limited to the embodiments and may be modified in various ways without departing from the spirit and scope of the present disclosure, so it should be understood that those modifications and changes are included in claims of the present disclosure.

### Industrial Applicability

The present disclosure is applied to an electric vehicle, an ESS, and so on, and is used for extinguishing a fire when the fire occurs in a battery.

## Claims

1. A battery pack case comprising:
a case body which is capable of accommodating a plurality of battery modules therein and which has an open first side; and
a case cover configured to open and close the open first side of the case body,
wherein the case cover comprises:
an outer shape part having at least one chamber which is sealed such that the chamber has an internal space having a predetermined capacity and which is formed in a plate shape having a predetermined width;
a fire extinguishing fluid filled in the internal space of the chamber at a predetermined discharge pressure in a predetermined amount;
a plurality of spray nozzles formed on the outer shape part in a direction toward the plurality of battery modules such that the plurality of spray nozzles is in communication with the internal space of the chamber; and
a plurality of sealing covers which is formed of a fusible alloy filled inside the plurality of spray nozzles so as to seal the plurality of spray nozzles and which is configured to melt at a predetermined temperature due to a fire that occurs in a battery, thereby allowing the fire extinguishing fluid to be sprayed on the battery through the plurality of spray nozzles,
wherein the outer shape part comprises an upper plate and a lower plate that are formed of a metal material, the upper plate and the lower plate being press formed along borders thereof and being welded to each other along the borders thereof so that a predetermined internal space is formed therein,
wherein each of the upper plate and the lower plate is provided with a plurality of forming parts formed such that the plurality of forming parts of the upper plate and the plurality of forming parts of the lower plate protrude inwardly so that end portions of the plurality of forming parts of the upper plate and end portions of the plurality of forming parts of the lower plate are in surface contact with each other when the upper plate and the lower plate are brought into contact with each other, the plurality of forming parts of the upper plate and the plurality of forming parts of the lower plate being welded with each other,
wherein each of the plurality of spray nozzles is formed as an integrated part of the lower plate by forming a hole in the lower plate in a state in which a portion of the lower plate further protrudes outwardly, and
wherein a coupling force between each of the plurality of sealing covers formed of the fusible alloy and an inner surface of each of the plurality of spray nozzles is further reinforced by threading the inner surface of each of the plurality of spray nozzles.

2. The battery pack case of claim 1, wherein the lower plate further comprises a separate insulation coating layer or an insulation pad for insulating the lower plate from a terminal inside a battery pack.

3. The battery pack case of claim 1, wherein the predetermined discharge pressure of the fire extinguishing fluid is formed by filling the internal space of the chamber with compressed air or nitrogen gas.

4. A battery pack comprising:
a plurality of battery modules; and
a case accommodating the plurality of battery modules,
wherein the case comprises:
a case body which is capable of accommodating the plurality of battery modules therein and which has an open first side; and
a case cover configured to open and close the open first side of the case body,
wherein the case cover comprises:
an outer shape part having at least one chamber which is sealed such that the chamber has an internal space having a predetermined capacity and which is formed in a plate shape having a predetermined width;
a fire extinguishing fluid filled in the internal space of the chamber at a predetermined discharge pressure in a predetermined amount;
a plurality of spray nozzles formed on the outer shape part in a direction toward the plurality of battery modules such that the plurality of spray nozzles is in communication with the internal space of the chamber; and
a plurality of sealing covers which is formed of a fusible alloy filled inside the plurality of spray nozzles so as to seal the plurality of spray nozzles and which is configured to melt at a predetermined temperature due to a fire that occurs in a battery, thereby allowing the fire extinguishing fluid to be sprayed on the battery through the plurality of spray nozzles,
wherein the outer shape part comprises an upper plate and a lower plate that are formed of a metal material, the upper plate and the lower plate being press formed along borders thereof and being welded to each other along the borders thereof so that a predetermined internal space is formed therein,
wherein each of the upper plate and the lower plate is provided with a plurality of forming parts formed such that the plurality of forming parts of the upper plate and the plurality of forming parts of the lower plate protrude inwardly so that end portions of the plurality of forming parts of the upper plate and end portions of the plurality of forming parts of the lower plate are in surface contact with each other when the upper plate and the lower plate are brought into contact with each other, the plurality of forming parts of the upper plate and the plurality of forming parts of the lower plate being welded with each other,
wherein each of the plurality of spray nozzles is formed as an integrated part of the lower plate by forming a hole in the lower plate in a state in which a portion of the lower plate further protrudes outwardly, and
wherein a coupling force between each of the plurality of sealing covers formed of the fusible alloy and an inner surface of each of the plurality of spray nozzles is further reinforced by threading the inner surface of each of the plurality of spray nozzles.

5. The battery pack of claim 4, further comprising a fire extinguishing fluid storage mechanism configured to store a fire extinguishing fluid at a predetermined discharge pressure in an amount sufficient to submerge all or some of the plurality of battery modules in the case, the fire extinguishing fluid storage mechanism being configured to supply the fire extinguishing fluid into the case when the fire occurs in the battery.

6. The battery pack of claim 5, wherein the case body has an inner portion provided with a partition wall structure divided into a plurality of sections so that the plurality of battery modules is capable of being accommodated in respective separation spaces.

7. The battery pack of claim 6, wherein a height of a partition wall of the case body is smaller than a height of a border of the case body.

8. The battery pack of claim 5, wherein each of the plurality of battery modules comprises a plurality of stacked battery cells and a plurality of porous absorption pads disposed between the plurality of battery cells.

9. The battery pack of claim 5, wherein the fire extinguishing fluid storage mechanism is in communication with a first side of the outer shape part through a communication line so that the fire extinguishing fluid stored in the fire extinguishing fluid storage mechanism is sprayed through an open discharge port of the plurality of spray nozzles via the outer shape part toward the battery where the fire occurs.

10. The battery pack of claim 5, wherein the predetermined discharge pressure of the fire extinguishing fluid in the fire extinguishing fluid storage mechanism and the predetermined discharge pressure of the fire extinguishing fluid in the case cover are formed by filling each internal space of the fire extinguishing fluid storage mechanism and the case cover with compressed air or nitrogen gas.
